# EUROPÄISCHE PATENTSCHRIFT

(11) **EP 2 428 297 B1**
(45) Veröffentlichungstag und Bekanntmachung des Hinweises auf die Patenterteilung: **30.11.2016**
(21) Anmeldenummer: 11175199.6
(22) Anmeldetag: 25.07.2011
(51) Int. Cl.: B23B 31/00, B23B 31/20

(54) **Spannfutter**
Collet chuck
Mandrin

(30) Priorität: 13.09.2010 DE 102010037485
(43) Veröffentlichungstag der Anmeldung: 14.03.2012
(73) Patentinhaber: Röhm GmbH, 89567 Sontheim/Brenz (DE)
(72) Erfinder: Baumann, Hans, 89567 Sontheim (DE)
(74) Vertreter: Hentrich Patentanwälte PartG mbB

(56) Entgegenhaltungen:
- WO-A1-01/34332
- FR-A- 1 250 002
- GB-A- 1 355 886
- JP-A- 60 104 625

## Beschreibung

Die Erfindung betrifft ein Spannfutter mit einem eine sich kegelförmig verjüngende Zentrieröffnung aufweisenden Futterkörper, in der ein mit einem Spanngewinde versehenes Spannteil angeordnet ist, mit einem Winkelgetriebe, das einen in das Spanngewinde eingreifenden, gegenüber dem Futterkörper axial unverschieblich und koaxial zu dem Spannteil gelagerten Gewindering aufweist, der mittels eines Antriebsglieds antreibbar ist, das um eine nicht parallel zu der Futterachse liegende Antriebsachse verdrehbar ist.

Ein derartiges Spannfutter ist beispielsweise aus der Offenlegungsschrift DE 100 567 29 A1 bekannt, bei dem mittels einer Bohrung tangential zum Gewindering ein Hohlraum im Futterkörper geschaffen wird, um diesen über ein Winkelgetriebe anzutreiben. Will man hierbei das Winkelgetriebe nach Verschleiß austauschen, so ist es sehr aufwendig, die in dem Futterkörper gelagerten Komponenten herauszunehmen.

Eine Form eines oben genannten Spannfutters ist in der nicht vorveröffentlichten deutsche Patentanmeldung mit dem Aktenzeichen DE 10 2009 003 802.7 erläutert, wobei hier, wie in der oben genannten Offenlegungsschrift, eine Bohrung für das Winkelgetriebe im Futterkörper in Form eines Hohlraumes vorgesehen ist. Diese Bohrung ist nur schwer herzustellen, da innen ein Hohlraum geschaffen werden muss, um ausreichend Platz für die Antriebsglied und Gewindering des Winkelgetriebes zu bieten.

In beiden Spannfuttern fehlt hierbei außerdem eine zusätzliche Sicherungsfunktion für das Winkelgetriebe in radialer Richtung. Da beim Bohrvorgang sehr starke Zentrifugalkräfte auf Bauteile wirken, die nicht unmittelbar auf der Futterachse angeordnet sind.

Die GB 1 355 886 A1 und die JP 60-104625 offenbaren jeweils Spannfutter, gemäß dem Oberbegriff des Anspruchs 1, in denen Winkelgetriebe mittels Sicherungsringen radial in dem Futterkörper gesichert sind. Hierbei muss jedoch der Futterkörper zunächst umständlich bearbeitet werden, um in dessen Flanke zunächst die Aufnahme für das Winkelgetriebe und danach eine äußerst präzise zu fertigende Spannringsaufnahme auszubilden.

In der FR 1 250 002 ist ein Spannfutter gezeigt, bei dem das Winkelgetriebe mittels eines Zapfens gesichert wird, der das Winkelgetriebe sehnenartig schneidet. Hierbei muss das Winkelgetriebe zunächst sehr aufwändig im Bereich der Sicherung bearbeitet werden, um die Funktionalität des Spannfutters zu gewährleisten.

In der WO 01/34332 A1 ist weiterhin ein Spannfutter offenbart, dessen Futterkörper zweigeteilt ist. Zwischen die beiden Teile des Futterkörpers wird das Winkelgetriebe befestigt, wobei die Notwendigkeit besteht, die beiden Teile des Futterkörpers aufwändig zu bearbeiten. Zudem müssen diese sehr präzise gefertigt sein, um die Betriebssicherheit zu gewährleisten.

Der Erfindung liegt daher die Aufgabe zugrunde, ein Spannfutter der eingangs genannten Art so auszubilden, dass ein möglichst einfacher Aufbau aus fertigungstechnischer Sicht bereit gestellt ist, mit einem radial sicherbaren Winkelgetriebe.

Diese Aufgabe wird nach der Erfindung dadurch gelöst, dass eine koaxial zur Futterachse angeordnete, mit einer Öffnung für ein Antriebswerkzeug vorgesehene Getriebehülse, das in einer Getriebeaufnahme befindliche Winkelgetriebe radial sichert.

Mit dieser Gestaltung ist der Vorteil verbunden, dass sich das Winkelgetriebe in einer Getriebeaufnahme befindet, welche von einer mit einer Öffnung für ein Antriebswerkzeug vorgesehene Getriebehülse umgeben ist. Die Hülse schützt das Winkelgetriebe vor Schmutz und sichert dessen Lagerung. Außerdem lässt sich eine Getriebeaufnahme dieser Art fertigungstechnisch sehr leicht realisieren, da beispielsweise keine Hohlkörper aus Vollmaterialien geschaffen werden müssen. Eine Ausführung dieser Art hält das Spannfutter sehr schlank.

Vorteilhaft ist außerdem, wenn die Getriebeaufnahme dem Flansch zugeordnet ist, insbesondere dann, wenn die Getriebeaufnahme radial zur Futterachse angeordnet ist. Bei der Herstellung des Flansches wird sich hierbei sehr leicht eine Bohrung ausgebildet zur Getriebeaufnahme realisieren lassen. Ebenso ist die Anordnung des Winkelgetriebes in Flanschnähe insofern sinnvoll, als dass das Winkelgetriebe sehr weit entfernt vom aufgenommenen Werkzeug positioniert ist, wodurch der Grad dessen Verschmutzung verringert wird.

Ein weiterer Vorteil ist mit der Bildung der Getriebehülse und des Flansches als einteiliges Bauteil verbunden. Bei der Fertigung entfällt der Schritt der Produktion eines Bauteils. Eine vorteilhafte Ausführung des Spannfutters ist auch die einteilige Ausbildung der von der Getriebehülse umgebenen Getriebeaufnahme mit dem Futterkörper. Hierbei entfällt ebenfalls ein Fertigungsschritt, da ein Bauteil des Spannfutters weniger gefertigt werden muss. Die einteilige Ausführung der Getriebehülse mit dem Futterkörper schützt außerdem beim Vorgang des Bohrens vor unnötiger Verschmutzung des Winkelgetriebes.

Eine besonders vorteilhafte Ausführung des Spannfutters ist die lösbare Sicherung der Getriebehülse am Futterkörper. Diese erleichtert die Montage, Wartung und Reinigung des Winkelgetriebes, da man im gelösten Zustand der Getriebehülse sehr gut Antriebsglied, Gewindering sowie Getriebeaufnahme einsehen kann.

Desweiteren ist von Vorteil, wenn die axiale Erstreckung der Getriebehülse den Futterkörper und/oder den Flansch anteilig oder vollständig umgibt. Auch hier ist die Verschmutzung des Winkelgetriebes reduziert.

Ist die Getriebehülse an ihrem der Zentrieröffnung abgewandten Ende umgebördelt, so garantiert dies einen noch festeren Sitz der Gewindehülse bezüglich axialer Bewegungen. Auch ein Verrutschen der Öffnung für Antriebswerkzeuge wird hierdurch vermindert.

Vorteilhaft ist, wenn das Winkelgetriebe als Kegeltrieb mit einem Kegelrad als Antriebsglied gebildet ist. Durch einen Kegeltrieb lassen sich verschiedene Orientierungen für die Gewindeaufnahme realisieren. Gleichfalls besteht auch die Möglichkeit, das Winkelgetriebe als Schneckentrieb mit einer Schnecke als Antriebsglied zu bilden.

Eine weitere vorteilhafte Ausführung ist die Bildung des Flansches einteilig mit einer Werkzeugspindel. Hierbei ist es möglich, sehr leicht zwischen verschiedenen Spannfuttern hin- und herzuwechseln. Die Bearbeitung von Werkstücken kann dabei reduziert werden.

Von Vorteil ist eine Ausführung der Erfindung mit einem als Spannzange gebildeten Spannteil. Hierdurch ist gewährleistet, dass das Werkzeug im gespannten Zustand sicher und von Hand nicht lösbar umschlossen ist.

Weist die Spannzange an ihrer Außenwandung in axialem Abstand von ihrem Ende einen Steg auf, so wird die Spannzange besser im Futterkörper geführt und dient außerdem der Schmutzabdichtung des Winkelgetriebes. Weist die Spannzange außerdem an ihrem dem Flansch zugewandten Ende einen in den Flansch einführbaren Bund auf, so dient auch dieser der Führung und der Schmutzabdichtung. Geht die Länge des Spanngewindes über die Länge des Sehnenteils des Gewinderinges hinaus, der in das Spanngewinde greift, so erzielt dies auch die oben genannte Wirkung der Schmutzabdichtung.

Im Folgenden wird die Erfindung an in der Zeichnung dargestellten Ausführungsbeispielen näher erläutert; es zeigen:
- Fig. 1: einen Längsschnitt durch ein erfindungsgemäßes Spannfutter,
- Fig. 2: einen Längsschnitt einer alternativen Ausführungsform des Spannfutters,
- Fig. 3: eine Vorderansicht der Fig. 2, teilweise geschnitten gezeigt,
- Fig. 4: eine der Fig. 1 entsprechende Darstellung einer alternativen Ausführungsform des Spannfutters,
- Fig. 5: eine weitere der Fig. 1 entsprechende Darstellung einer alternativen Ausführungsform des Spannfutters,
- Fig. 6: eine perspektivische Darstellung der Spannzangen, und
- Fig. 7: eine der Fig. 6 entsprechende Darstellung einer weiteren Ausführungsform der Erfindung.

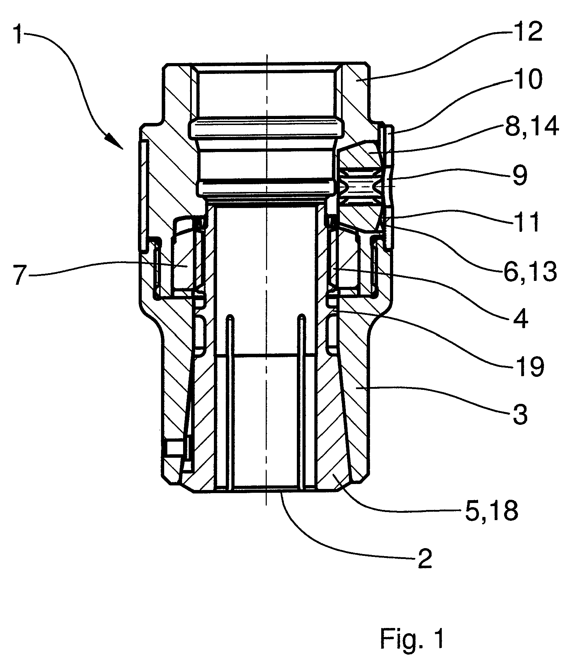

In der Zeichnung ist in den Fig. 1 - 7 ein Spannfutter 1 dargestellt, das einen Futterkörper 3 aufweist, in dem eine sich kegelförmig verjüngende Zentrieröffnung 2 gebildet ist. In dieser Zentrieröffnung 2 ist ein Spannteil 5 angeordnet, das an dem dem Flansch 12 zugewandten Ende ein Spanngewinde 4 aufweist, in das ein Gewindering 7 eingreift, der in dem Futterkörper 3 axial unverschieblich und koaxial zu dem Spannteil 5 gelagert ist. Das Spannteil 5 ist dabei als geschlitzte Spannzange 18 gebildet, bei der die Schlitze aus Staubschutzgründen mit Gummi gefüllt sein können. Der Gewindering 7 ist Teil eines Winkelgetriebes 6 mit einem Antriebsglied 8, welches in einer Getriebeaufnahme 11 positioniert ist. Der Getriebeaufnahme 11 ist koaxial zur Futterachse eine Getriebehülse 10 zugeordnet, die das Winkelgetriebe 6 sichert und vor Schmutz schützt. Die Getriebehülse 10 ist mit einer Öffnung für ein Antriebswerkzeug 9 gebildet. In Fig. 1 ist die Getriebeaufnahme 11 radial zur Futterachse angeordnet und das Winkelgetriebe 6 ist als Kegeltrieb 13 mit einem Antriebsglied 8 und einem zugehörigen Gewindering 7 gebildet. Es ist hierbei dem Flansch 12 zugeordnet. Der Gewindering 7 greift in das Spanngewinde 4 des Spannteils 5 ein. Das Spannteil 5 ist hierbei zu einer Spannzange 18 gebildet, welche an ihrer Außenwandung in axialem Abstand von ihrem Ende einen Steg 19 aufweist.

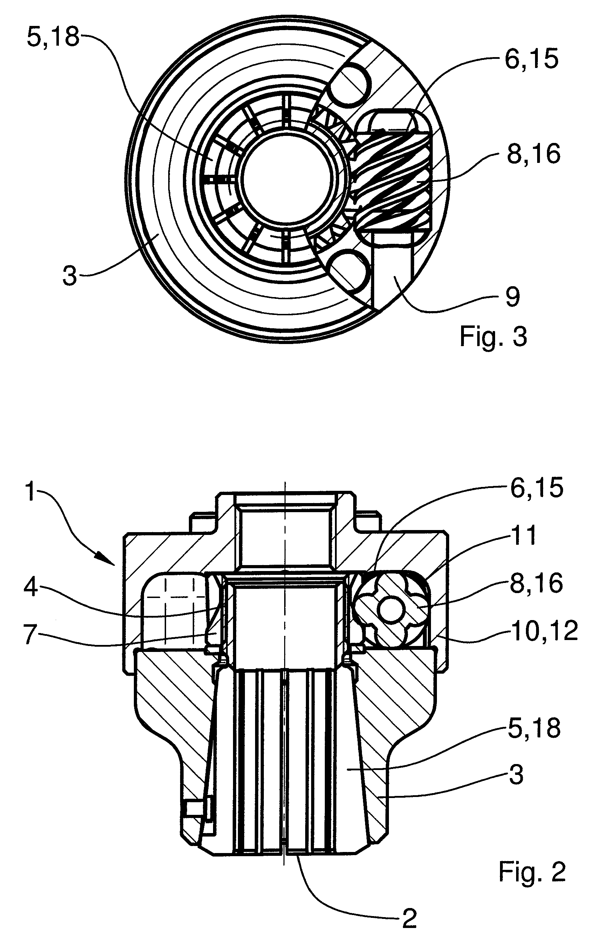

Fig. 2 zeigt die Möglichkeit, dass die Getriebehülse 10 und der Flansch 12 einteilig gebildet sind. Das Winkelgetriebe 6 ist in dieser Darstellung als Schneckentrieb 15 realisiert, mit einer Schnecke 16 als Antriebsglied 8. Auch hier ist entsprechend Fig. 1 die Getriebeaufnahme 11 dem Flansch 12 zugeordnet.

Fig. 3 zeigt eine Vorderansicht von Fig. 2, teilweise geschnitten, derart, dass man das zum Schneckentrieb 15 gebildete Winkelgetriebe 6 sehr gut erkennen kann. Hierbei ist dargestellt, wie sich das Antriebsglied 8 und der Gewindering 7 verzahnen. Außerdem ist hier die Öffnung für ein Antriebswerkzeug 9 in der Wandung des Flansches 12 gezeigt.

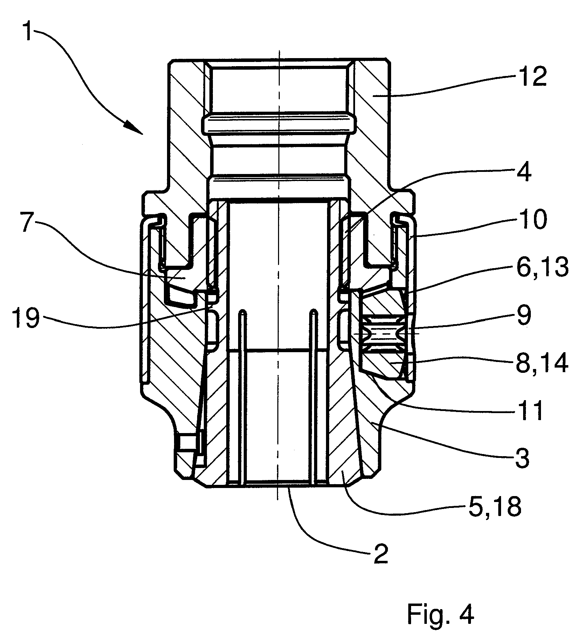

Fig. 4 zeigt die Anordnung der Getriebeaufnahme 11 im Futterkörper 3, wobei hier das Winkelgetriebe 6 ebenfalls gemäß Fig. 1 als Kegeltrieb 13 gebildet ist. Hier ist die Ausführungsform der Getriebehülse 10 dargestellt, die an ihrem der Zentrieröffnung 2 abgewandten Ende umgebördelt ist. Das zur Spannzange 18 gebildete Spannteil 5 weist hier, gemäß Fig. 1, ebenfalls an seiner Außenwandung im axialen Abstand von seinem Ende einen Steg 19 auf. Sein Spanngewinde 4 besitzt eine Länge, die über die Länge des Sehnenteils des Gewinderinges 7 hinausgeht, der in das Spanngewinde 4 greift.

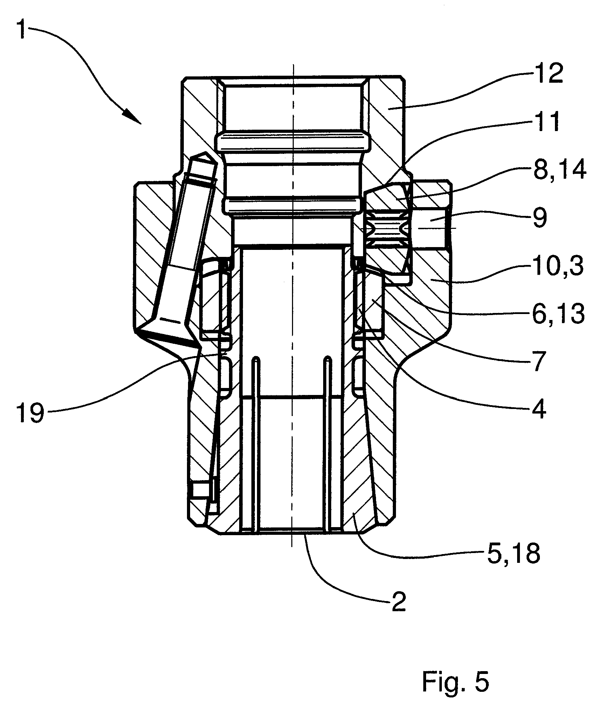

Fig. 5 zeigt eine der Fig. 1 entsprechende alternative Ausführungsform der Erfindung, wobei hier die Getriebehülse 10 dem Futterkörper 3 zugeordnet ist und beide als ein gemeinsames Bauteil vorkommen. Wieder ist das Winkelgetriebe 6 über einen Kegeltrieb 13 realisiert und das Spannteil 5 zeigt die gleiche Ausführungsform wie in Fig. 1. Ein verbindendes Element sichert den Futterkörper 3 gegen den Flansch 12.

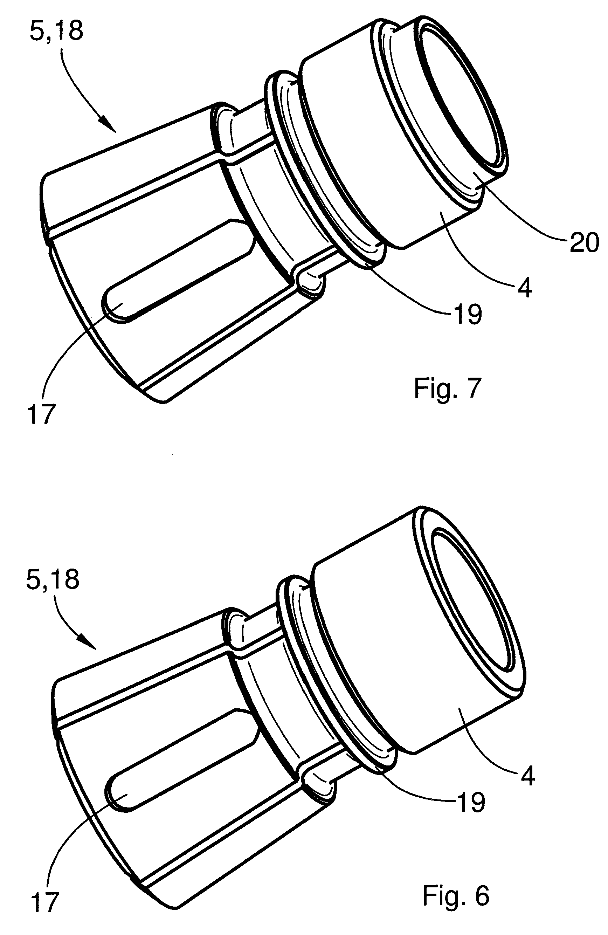

Fig. 6 zeigt das zur Spannzange 18 gebildete Spannteil 5, wobei hier deutlich der Steg 19 an der Außenwandung in axialem Abstand des Endes der Spannzange zu erkennen ist. Die Darstellung zeigt außerdem eine Nut 17, die gegen Verdrehen sichert. Das Spanngewinde 4 des Spannteils 5 ist hier so gebildet, dass es sich bis zu dem dem Flansch 12 zugeordneten Ende des Spannteils 5 erstreckt.

In Fig. 7 ist das Spanngewinde 4 nicht so stark ausgeprägt wie in Fig. 6 dargestellt, so dass an dem dem Flansch 12 zugewandten Ende ein Bund 20 entsteht, welcher in den Flansch 12 einführbar ist.

### Bezugszeichenliste

- 1: Spannfutter
- 2: Zentrieröffnung
- 3: Futterkörper
- 4: Spanngewinde
- 5: Spannteil
- 6: Winkelgetriebe
- 7: Gewindering
- 8: Antriebsglied
- 9: Öffnung für ein Antriebswerkzeug
- 10: Getriebehülse
- 11: Getriebeaufnahme
- 12: Flansch
- 13: Kegeltrieb
- 14: Kegelrad
- 15: Schneckentrieb
- 16: Schnecke
- 17: Nut
- 18: Spannzange
- 19: Steg
- 20: Bund

## Patentansprüche

1. Spannfutter (1) mit einem eine sich kegelförmig verjüngende Zentrieröffnung (2) aufweisenden Futterkörper (3), in der ein mit einem Spanngewinde (4) versehenes Spannteil (5) angeordnet ist, mit einem Winkelgetriebe (6), das einen in das Spanngewinde (4) eingreifenden, gegenüber dem Futterkörper (3) axial unverschieblich und koaxial zu dem Spannteil (5) gelagerten Gewindering (7) aufweist, der mittels eines Antriebsglieds (8) antreibbar ist, das um eine nicht parallel zu der Futterachse liegende Antriebsachse verdrehbar ist, **dadurch gekennzeichnet, dass** eine koaxial zur Futterachse angeordnete, mit einer Öffnung für ein Antriebswerkzeug (9) vorgesehene Getriebehülse (10), das in einer Getriebeaufnahme (11) befindliche Winkelgetriebe (6) radial sichert.

2. Spannfutter (1) nach Anspruch 1, **dadurch gekennzeichnet, dass** die Getriebeaufnahme (11) dem Flansch (12) zugeordnet ist.

3. Spannfutter (1) nach Anspruch 1 oder 2, **dadurch gekennzeichnet, dass** die Getriebehülse (11) und der Flansch (12) einteilig gebildet sind.

4. Spannfutter (1) nach Anspruch 1 oder 3, **dadurch gekennzeichnet, dass** die von der Getriebehülse (10) umgebene Getriebeaufnahme (11) dem Futterkörper (3) zugeordnet ist, und diese einteilig gebildet sind.

5. Spannfutter (1) nach einem der Ansprüche 1 bis 4, **dadurch gekennzeichnet, dass** die Getriebehülse (10) lösbar am Futterkörper (3) gesichert ist.

6. Spannfutter (1) nach einem der Ansprüche 1 bis 5, **dadurch gekennzeichnet, dass** die axiale Erstreckung der Getriebehülse (10) den Futterkörper (3) und / oder den Flansch (12) anteilig oder vollständig umgibt.

7. Spannfutter (1) nach einem der Ansprüche 1 bis 6, **dadurch gekennzeichnet, dass** die Getriebehülse (10) an ihrem der Zentrieröffnung (2) abgewandten Ende umgebördelt ist.

8. Spannfutter (1) nach einem der Ansprüche 1 bis 6, **dadurch gekennzeichnet, dass** das Winkelgetriebe (6) als Kegeltrieb (13) mit einem Kegelrad (14) als Antriebsglied (8) gebildet ist.

9. Spannfutter (1) nach einem der Ansprüche 1 bis 6, **dadurch gekennzeichnet, dass** das Winkelgetriebe (6) als Schneckentrieb (15) mit einer Schnecke (16) als Antriebsglied (8) gebildet ist.

10. Spannfutter (1) nach einem der Ansprüche 1 bis 9, **dadurch gekennzeichnet, dass** der Flansch (12) einteilig mit einer Werkzeugspindel gebildet ist.

11. Spannfutter (1) nach einem der Ansprüche 1 bis 11, **dadurch gekennzeichnet, dass** das Spannteil (5) als Spannzange (18) gebildet ist.

12. Spannfutter (1) nach Anspruch 11, **dadurch gekennzeichnet, dass** die Spannzange (18) an ihrer Außenwandung in axialem Abstand von ihrem Ende einen Steg (19) aufweist.

13. Spannfutter (1) nach Anspruch 11 oder 12, **dadurch gekennzeichnet, dass** die Spannzange (18) an ihrem dem Flansch (12) zugewandten Ende einen in den Flansch (12) einführbaren Bund (20) aufweist.

14. Spannfutter (1) nach einem der Ansprüche 11 bis 13, **dadurch gekennzeichnet, dass** die Spannzange (18) ein Spanngewinde (4) besitzt, dessen Länge über die Länge des Sehnenteils des Gewinderinges (7) hinausgeht, der in das Spanngewinde (4) greift.

## Claims

1. A chuck (1) with a chuck body (3) having a conically tapered centering hole (2) holding a clamping element (5) provided with a screwthread (4), an angle drive (6) having a threaded ring (7) that engages with the screwthread (4) and is axially nondisplaceable relative to the chuck body (3) and coaxial to the clamping element (5) and that can be driven by a drive gear (8) that is rotatable about a drive axis that is not parallel to the chuck axis, **characterized in that** a gear sleeve (10) that is coaxial to the chuck axis and is provided with an aperture for a drive tool (9) radially secures the angle drive (6) in a gear seat (11).

2. The chuck (1) according to claim 1, **characterized in that** the gear seat (11) is part of the rear part (12).

3. The chuck (1) according to claim 1 or claim 2, **characterized in that** the gear sleeve (11) and the rear part (12) are formed as one piece.

4. The chuck (1) according to claim 1 or claim 3, **characterized in that** the gear seat (11) enclosed by the gear sleeve (10) is part of the chuck body (3) and they are formed as one piece.

5. The chuck (1) according to any one of the claims 1 to 4, **characterized in that** the gear sleeve (10) is releasably secured to the chuck body (3).

6. The chuck (1) according to any one of the claims 1 to 5, **characterized in that** an axial extension of the gear sleeve (10) encloses the chuck body (3) and/or the rear part (12) partly or completely.

7. The chuck (1) according to any one of the claims 1 to 6, **characterized in that** the gear sleeve (10) is bent over at its end turned away from the centering hole (2).

8. The chuck (1) according to any one of the claims 1 to 6, **characterized in that** the angle drive (6) is formed as a bevel-gear drive (13) having a bevel gear (14) as drive gear (8).

9. The chuck (1) according to any one of the claims 1 to 6, **characterized in that** the angle drive (6) is formed as a worm-gear drive (15) having a worm gear (16) as drive gear (8).

10. The chuck (1) according to any one of the claims 1 to 9, **characterized in that** the rear part (12) is formed as one piece with a tool spindle.

11. The chuck (1) according to any one of the claims 1 to 11, **characterized in that** the clamping element (5) is formed as a collet (18).

12. The chuck (1) according to claim 11, **characterized in that** the collet (18) has a rib (19) on its outer wall at an axial spacing from its end.

13. The chuck (1) according to claim 11 or claim 12, **characterized in that** at its end facing toward the rear part (12), the collet (18) has a collar (20) that can be inserted into the rear part (12).

14. The chuck (1) according to any one of the claims 11 to 13, **characterized in that** the collet (18) has a screwthread (4) whose length exceeds the length of the chord part of the threaded ring (7) that engages with the screwthread (4).

## Revendications

1. Mandrin de serrage (1) comprenant un corps de mandrin (3) présentant une ouverture de centrage (2) qui se rétrécit en forme de cône et dans laquelle est disposé un élément de serrage (5) doté d'un filetage de serrage (4), comprenant un engrenage angulaire (6) qui présente une bague filetée (7) qui s'engage dans le filetage de serrage (4), est montée de manière fixe dans la direction axiale et de façon coaxiale avec l'élément de serrage (5) et peut être entraînée au moyen d'un organe d'entraînement (8) qui peut être mis en rotation autour d'un axe d'entraînement non parallèle à l'axe de mandrin, **caractérisé en ce qu'**une douille d'engrenage (10), disposée de façon coaxiale avec l'axe de mandrin et dotée d'une ouverture pour un outil d'entraînement (9), immobilise radialement l'engrenage angulaire (6) se trouvant dans un logement d'engrenage (11).

2. Mandrin de serrage (1) selon la revendication 1, **caractérisé en ce que** le logement d'engrenage (11) est associé à la collerette (12).

3. Mandrin de serrage (1) selon la revendication 1 ou 2, **caractérisé en ce que** la douille d'engrenage (11) et la collerette (12) sont réalisées d'une seule pièce.

4. Mandrin de serrage (1) selon la revendication 1 ou 3, **caractérisé en ce que** le logement d'engrenage (11) entouré par la douille d'engrenage (10) est associé au corps de mandrin (3), et que ceux-ci sont réalisés d'une seule pièce.

5. Mandrin de serrage (1) selon l'une des revendications 1 à 4, **caractérisé en ce que** la douille d'engrenage (10) est fixée de façon amovible sur le corps de mandrin (3).

6. Mandrin de serrage (1) selon l'une des revendications 1 à 5, **caractérisé en ce que** la dimension axiale de la douille d'engrenage (10) entoure partiellement ou complètement le corps de mandrin (3) et/ou la collerette (12).

7. Mandrin de serrage (1) selon l'une des revendications 1 à 6, **caractérisé en ce que** la douille d'engrenage (10) présente un bord rabattu à son extrémité opposée à l'ouverture de centrage (2).

8. Mandrin de serrage (1) selon l'une des revendications 1 à 6, **caractérisé en ce que** l'engrenage angulaire (6) est réalisé comme engrenage conique (13) avec une roue conique (14) en tant qu'organe d'entraînement (8).

9. Mandrin de serrage (1) selon l'une des revendications 1 à 6, **caractérisé en ce que** l'engrenage angulaire (6) est réalisé comme engrenage à vis sans fin (15) avec une vis dans fin (16) en tant qu'organe d'entraînement (8).

10. Mandrin de serrage (1) selon l'une des revendications 1 à 9, **caractérisé en ce que** la collerette (12) est réalisée d'une seule pièce avec une broche d'outil.

11. Mandrin de serrage (1) selon l'une des revendications 1 à 11, **caractérisé en ce que** l'élément de serrage (5) est réalisé comme pince de serrage (18).

12. Mandrin de serrage (1) selon la revendication 11, **caractérisé en ce que**, à distance axiale de son extrémité, la pince de serrage (18) présente une nervure (19) sur sa paroi extérieure.

13. Mandrin de serrage (1) selon la revendication 11 ou 12, **caractérisé en ce que**, à son extrémité tournée vers la collerette (12), la pince de serrage (18) présente un collet (20) pouvant être engagé dans la collerette (12).

14. Mandrin de serrage (1) selon l'une des revendications 11 à 13, **caractérisé en ce que** la pince de serrage (18) présente un filetage de serrage (4) dont la longueur dépasse la longueur de la partie formant corde de la bague filetée (7) qui s'engage dans le filetage de serrage (4).
